(19) Europäisches Patentamt
European Patent Office
Office européen des brevets

(11) **EP 1 950 379 B1**

(12) **FASCICULE DE BREVET EUROPEEN**

(45) Date de publication et mention
de la délivrance du brevet:
**07.10.2009 Bulletin 2009/41**

(51) Int Cl.:
***F01D 5/02*** *(2006.01)* ***G01M 1/04*** *(2006.01)*

(21) Numéro de dépôt: **08100620.7**

(22) Date de dépôt: **18.01.2008**

(54) **Procédé d'équilibrage modulaire de rotor de turbomachine**

Modulares Ausgleichsverfahren für einen Strömungsmaschinenrotor

Method for modular balancing of a turbomachine rotor

(84) Etats contractants désignés:
**DE FR GB**

(30) Priorité: **29.01.2007 FR 0700595**

(43) Date de publication de la demande:
**30.07.2008 Bulletin 2008/31**

(73) Titulaire: **SNECMA**
**75015 Paris (FR)**

(72) Inventeurs:
• **LUCAS, Paul**
**75005, PARIS (FR)**
• **LUINAUD, Alain**
**77000, LIVRY SUR SEINE (FR)**

(74) Mandataire: **David, Daniel et al**
**Bloch & Bonnétat**
**23bis, rue de Turin**
**75008 Paris (FR)**

(56) Documents cités:
**US-A- 4 586 225** **US-B1- 6 341 419**

# Description

La présente invention concerne le domaine des turbomachines et des moteurs à turbine à gaz en particulier.

Une turbomachine comprend des rotors qui sont généralement constitués d'une pluralité d'éléments fabriqués séparément et assemblés mécaniquement. Un moteur à turbine à gaz comprend ainsi un ou plusieurs ensembles rotoriques constitués chacun d'un compresseur et d'une turbine. Pour assurer une certaine flexibilité dans l'entretien des moteurs, les ensembles sont constitués en modules interchangeables. Pour un rotor de moteur à turbine à gaz on associe un module de compresseur à un module de turbine. Dans le cadre d'une réparation par exemple on peut ainsi remplacer le module compresseur, respectivement turbine, du rotor par un autre module.

Cette structure modulaire des turbomachines implique un équilibrage préalable de chaque module. Il est en effet souhaitable de ne pas avoir à rééquilibrer le rotor complet après la substitution d'un module par un autre.

On a ainsi conçu une méthode d'équilibrage modulaire de rotor qui permet le changement standard des pièces équilibrées par cette méthode sans avoir à rééquilibrer le rotor.

Cette méthode pour un rotor de moteur à turbine à gaz constitué d'un module compresseur et d'un module turbine, consiste donc à équilibrer séparément les modules quand ils sont assemblés avec des modules complémentaires équivalents ou de substitution de turbine respectivement de compresseur. Les modules complémentaires équivalents, désignés également masses de substitution, représentent par leur longueur, leur masse et la position de leur centre de gravité la partie complémentaire, dans le rotor, de la pièce à équilibrer. On monte un tel ensemble sur une machine à équilibrer qui permet d'en déterminer le balourd et qui fournit les indications sur la correction à apporter dans les plans de correction du module, c'est-à-dire la masse et sa position dans le plan : rayon et angle.

Avec cette méthode on équilibre les deux modules comme s'ils étaient assemblés à des modules complémentaires parfaits. Cependant il apparaît que des défauts d'accostage des modules, des modules complémentaires équivalents et des outillages faussent l'équilibrage. Ces défauts sont dus au défaut de perpendicularité de la face de jonction du module à équilibrer par rapport à son axe de rotation.

Lors de l'équilibrage du module ensemble avec le module complémentaire équivalent on peut dissocier plusieurs balourds. Tel que mis en évidence par une machine équilibreuse le balourd total peut être décomposé selon la somme vectorielle suivante :

$$Bt = Bp + Bg + Bo + Ba$$

Bt est le balourd total du rotor composé de l'ensemble formé par le module et le module complémentaire équivalent. Ses caractéristiques sont fournies par l'équilibreuse.

Bp est le balourd intrinsèque du rotor à équilibrer résultant de la non homogénéité des matériaux, du défaut de montage des pièces qui le constituent, et de la répartition des aubes aussi. Ce balourd est fixe mais inconnu. On cherche à le corriger.

Bg est le balourd géométrique. Il est engendré par le défaut de perpendicularité de la face de jonction du module à équilibrer par rapport à son axe de rotation et qui est mis en évidence par le module de substitution. Ce balourd est fixe. Il est connu par la caractérisation géométrique que l'on effectue systématiquement pour le montage du module. On cherche à le corriger.

Bo est le balourd de l'outillage c'est-à-dire l'ensemble des balourds engendrés par les défauts du module équivalent, des outillages tournants ainsi que de l'entraînement. Ces balourds sont annulés par l'opération de retourne de l'outillage. On rappelle que cette opération consiste à effectuer une première mesure de balourd à O° par rapport au plan de référence passant par l'axe, et une seconde mesure de l'ensemble monté sur l'outillage en le retournant à 180° par rapport au plan de référence.

Ba est le balourd d'accostage du module complémentaire. Il est engendré par l'excentricité provoquée par le défaut d'accostage du module complémentaire sur le module à équilibrer. Il est variable et inconnu. Son amplitude doit être déterminée afin de connaître son influence sur l'équilibrage du rotor dans son ensemble. C'est un balourd parasite qui introduit une erreur lors de l'équilibrage modulaire avec un module complémentaire ou masse de substitution. Plus particulièrement ce défaut est variable d'un montage à l'autre, il n'est pas connu et ne peut être corrigé par l'opération de retourne par rapport à l'outillage. La non répétitivité de ce type de défaut s'explique par la variation des conditions d'un montage à l'autre, par exemple la température peut varier, le serrage et le positionnement peuvent également varier. Il s'agit donc d'un balourd parasité qu'il est nécessaire de maintenir inférieur à une valeur minimale pour que la méthode d'équilibrage modulaire donne des résultats exploitables. Notamment si l'excentricité provenant de ce défaut est de même importance que l'excentricité provenant du défaut géométrique de la face de jonction du module, ce dernier peut être minimisé ou augmenté sans qu'on puisse l'anticiper. Un tel défaut est donc susceptible d'engendrer une valeur en excès ou en défaut, en fonction des circonstances du montage, du balourd correcteur appliqué avec la méthode d'équilibrage modulaire.

En résumé le défaut d'accostage est non prévisible et non répétitif. Il parasite l'équilibrage modulaire et fausse les résultats.

Une autre méthode pour équilibrer un rotor de turbomachine selon l'art antérieur est connue du document US 4 586 225.

L'objectif de la présente invention est donc de trouver une méthode d'équilibrage modulaire améliorée selon laquelle les effets néfastes des défauts d'accostage des modules complémentaires et des outillages sont supprimés.

Conformément à l'invention on parvient à remédier à ce problème. Le procédé d'équilibrage selon l'invention d'un premier module de turbomachine, comprenant le long d'un axe de rotation un plan de palier d'un côté et un plan de jonction de l'autre, par rapport à un rotor comprenant ledit module, selon lequel

On définit un module complémentaire équivalent, de telle façon que les deux modules forment un rotor équivalent audit rotor par assemblage le long du plan de jonction,

On détermine le balourd total dudit rotor équivalent et la correction correspondante à apporter sur ledit module,

est caractérisé par le fait qu'il comprend les étapes suivantes :

- On détermine le défaut de concentricité du palier du premier module par rapport à l'axe perpendiculaire au plan de jonction,
- On calcule le balourd géométrique théorique engendré par ledit module complémentaire équivalent et résultant dudit défaut de concentricité,
- On monte un tourillon court sur le premier module du côté du plan de jonction pour former un rotor court dont l'axe de rotation est sensiblement confondu avec l'axe du module, et on mesure le balourd du rotor court.
- On détermine le balourd dudit module en ajoutant au balourd du rotor un balourd systématique correspondant audit balourd géométrique théorique.

Plus particulièrement la longueur du tourillon court est déterminée de façon que l'axe du rotor court soit excentré par rapport à l'axe du module d'une valeur variable en fonction du rotor et de la tolérance d'équilibrage

Ainsi l'invention repose sur le remplacement du module complémentaire réel par un module complémentaire théorique calculé dont on introduit les caractéristiques pour la détermination du balourd à corriger. Par ce moyen on tient compte lors de l'équilibrage du module, de l'influence d'un module complémentaire parfait, monté sans défaut d'accostage.

Par exemple par cette méthode on évite à chaque opération de retourne par rapport à l'outillage de cumuler les erreurs introduites par les défauts d'accostage de type Ba rapportés plus haut.

Bien que visant plus particulièrement les rotors de moteur à turbine à gaz l'invention s'applique à tout type d'équilibrage et pour tout partie de rotor que l'on cherche à rendre modulaire.

La solution de l'invention présente en outre les avantage suivants.

Elle permet la réalisation d'un équilibrage modulaire précis. Sa précision ne dépend que de la précision de l'équilibreuse utilisée et des mesures de concentricité effectuées.

Elle permet d'effectuer les opérations d'équilibrage avec un gain de temps par rapport à la méthode d'équilibrage modulaire de l'art antérieur. Ce gain de temps est lié à :

- La réaction du rotor face aux masses appliquées lors de l'opération de correction. Avec un module complémentaire réel on a une grande instabilité résultant d'une mauvaise séparation de plan. Avec un tourillon court au contraire, le rotor reste stable et la correction apportée dans un plan de correction a peu d'influence dans l'autre plan. Cela résulte d'une bonne séparation de plan.
- L'accessibilité du plan de correction à travers le tourillon court. En raison de la faible longueur du tourillon court par rapport à celle d'un module complémentaire, l'accessibilité est meilleure.
- La précision d'accostage pour un tourillon court est moins contraignante qu'avec un module complémentaire.

Il serait possible par ailleurs de supprimer l'opération de retourne outillage avec une équilibreuse pourvue d'outillages courts légers et équilibrés.

La méthode, en employant des tourillons courts, qui sont moins exigeants en précision d'usinage, est plus économique que la méthode conventionnelle.

On décrit maintenant ci-après l'invention plus en détail en référence aux dessins annexés sur lesquels

La figure 1 représente schématiquement un rotor de moteur à turbine à gaz avec ses deux modules
La figure 2 représente schématiquement le montage d'un module complémentaire équivalent sur un module de turbine pour l'équilibrage modulaire ;
La figure 3 montre le principe de mesure de l'excentricité sur un module ;
La figure 4 montre un module de turbine sur lequel on a monté un tourillon court ;
La figure 5 représente un diagramme sur lequel figure le balourd total à corriger sur deux plans de correction C1 et C2.

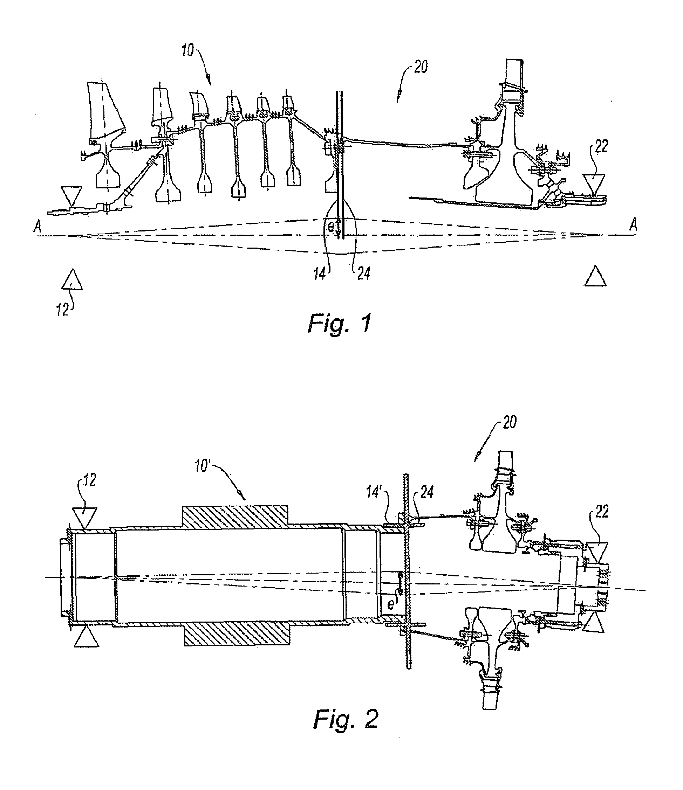

Sur la figure 1 on a représenté un rotor de moteur à turbine à gaz. Par exemple, il s'agit ici d'un rotor haute pression d'un moteur à double corps. Le rotor 1 est composé d'un premier module et d'un second module le premier module est ici le compresseur 10 et le second module est la turbine 20. Ils comportent chacun un tourillon support de palier 12 respectivement 22 et un plan de jonction, 14 et 24. le rotor tourne autour de son axe de rotation AA passant par les paliers 12 et 22. chacun des modules est obtenu par empilage de composants élémentaires. En raison des tolérances de fabrication, les plans de jonction 14 et 24 par lesquels les deux modules sont assemblés et boulonnés ne sont pas parfaitement perpendiculaires à leur propre axe de rotation. Il s'ensuit au montage une excentricité e, exagérée sur la figure

On a représenté sur la figure 2 un montage pour l'équilibrage du module de turbine 20. Le module 20 comprend d'un côté le tourillon formant support du palier 22 et, de l'autre une face de jonction 24 avec des moyens de fixation au module de compresseur complémentaire équivalent. On a monté sur le module de turbine 20 un module de compresseur équivalent 10' en le fixant par une extrémité 14' à la face de jonction 24 du module de turbine 20. Ce module 10' comprend un tourillon à son autre extrémité pour le montage d'un palier 12'. Ce module complémentaire, ici de compresseur, équivalent 10' vient se substituer mécaniquement au compresseur du rotor en terme de comportement dynamique pour l'équilibrage. Ainsi sa longueur est définie de manière que la distance entre les deux paliers 12' et 22 soit celle du moteur. Sa masse et son centre de gravité sont les mêmes que ceux du compresseur 10. Le montage est supposé parfait.

Pour l'opération d'équilibrage du module 20, on place cet ensemble dans une équilibreuse, connue en soi. Le balourd total mesuré correspond au balourd intrinsèque du module plus son balourd géométrique dû au défaut de perpendicularité et au balourd outillage. Ce dernier est éliminé par l'opération de retourne.

On a représenté sur la figure, un montage sans défaut. Cependant comme expliqué plus haut selon les circonstances du montage s'ajoute au balourd géométrique un balourd dit d'accostage que l'on ne peut maîtriser et qui vient soit minimiser soit surestimer le balourd.

Pour palier ce problème conformément à l'invention on calcule un balourd géométrique théorique et on procède à la détermination du balourd en tenant compte de celui-ci.

Dans ce but on procède à la détermination de l'excentricité résultant du défaut de perpendicularité du plan de jonction.

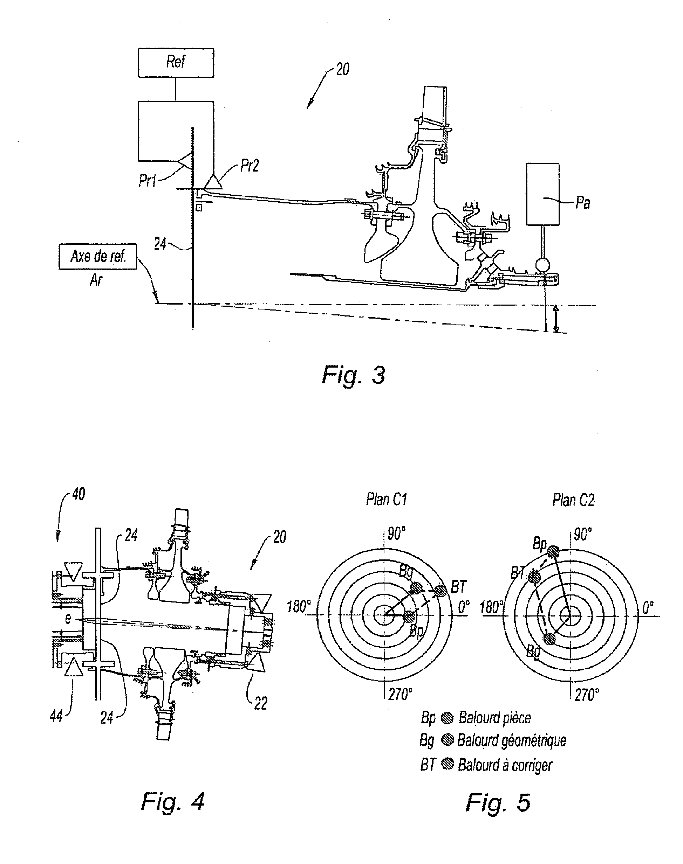

On voit sur la figure 3 un mode de mesure de cette excentricité sur un module de turbine 20.

On définit deux plans de référence Pr1 et Pr2 par rapport au plan de jonction 24 du module 20 ainsi qu'un axe de référence Ar perpendiculaire au plan 24. Un palpeur Pa d'une machine de mesure tridimensionnelle mesure la position du tourillon support de palier 22. on obtient ainsi la mesure de l'écart de l'axe du tourillon par rapport à l'axe de référence.

Pour la mesure de cette excentricité on peut par exemple mettre en oeuvre la méthode développée sous le nom Genspect par General Electric.

Connaissant la valeur de l'excentricité on détermine le balourd géométrique de la masse de substitution ou module complémentaire équivalent à partir de la connaissance de son centre de gravité et de sa masse. Le balourd est exprimé en cm. g

On procède à la détermination du balourd pièce de la façon suivante.

Au lieu d'un module complémentaire réel, on place un simple tourillon court sur le module à équilibrer. On voit sur la figure 4 le montage d'un tel tourillon court 40 sur un module de turbine 20. Il comprend une face de jonction 44 pour le montage sur la face de jonction 24 du module et il comporte une surface cylindrique formant support pour un palier 42. Comme on le voit sur la figure 4, l'axe entre les deux paliers 44 et 22 se confond quasiment avec l'axe du module. L'excentricité mesurée au plan de jonction entre les deux axes est variable en fonction du type de rotor et de la tolérance d'équilibrage.

L'objectif visé par le montage de ce tourillon court est d'éliminer l'influence du défaut géométrique. Le balourd mesuré correspond au balourd pièce Bp tel que rapporté dans le préambule de la présente demande.

On obtient le balourd total du module de turbine 20 par la somme vectorielle

$$Bt = Bp + Bg$$

Dans un rotor de turbomachine on a en général deux plans de correction par module.

On a représenté sur le diagramme de la figure 5 le balourd total à corriger sur les deux plans de correction C1 et C2.

## Revendications

1. Procédé d'équilibrage d'un premier module (20) de turbomachine, comprenant le long d'un axe de rotation un plan de palier (22) d'un côté et un plan de jonction (24) de l'autre, par rapport à un rotor (1) comprenant ledit module (20), selon lequel
on définit un module complémentaire équivalent, de telle façon que les deux modules forment un rotor équivalent audit rotor par assemblage le long du plan de jonction (24),
on détermine le balourd total dudit rotor équivalent et la correction correspondante à apporter sur le dit module,
**caractérisé par le fait qu'**il comprend les étapes suivantes:

on détermine le défaut de concentricité du palier (22) du premier module (20) par rapport à l'axe perpendiculaire au plan de jonction (24) ;
on calcule le balourd géométrique théorique dudit module complémentaire équivalent,

on monte un tourillon court (40) sur le premier module du côté du plan de jonction (24) pour former un rotor court dont l'axe de rotation est sensiblement confondu avec l'axe du module (20) et on mesure le balourd du rotor court, on détermine le balourd total dudit module en ajoutant au balourd du rotor court un balourd systématique correspondant au balourd géométrique.

**2.** Procédé selon la revendication précédente selon lequel le rotor étant un rotor de moteur à turbine à gaz, on équilibre séparément le module compresseur et le module turbine.

## Claims

**1.** A method of balancing a first turbomachine module (20), comprising along an axis of rotation a bearing plane (22) on one side and a junction plane (24) on the other, with respect to a rotor (1) comprising said module (20), in which
an equivalent complementary module is defined such that the two modules form a rotor equivalent to said rotor by assembling along the junction plane (24),
the total unbalance of said equivalent rotor and the corresponding correction to be made to said module are determined,
which method comprises the following steps:

the concentricity deviation of the bearing (22) of the first module (20) with respect to the axis perpendicular to the junction plane (24) is determined; the theoretical geometric unbalance of said equivalent complementary module is calculated;
a short journal (40) is mounted on the first module adjacent to the junction plane (24) to form a short rotor whose axis of rotation is substantially coincident with the axis of the module (20), and the unbalance of the short rotor is measured; and
the total unbalance of said module is determined by adding to the unbalance of the short rotor a systematic unbalance corresponding to the geometric unbalance.

**2.** The method as claimed in the preceding claim, in which, with the rotor being a gas turbine engine rotor, the compressor module and the turbine module are balanced separately.

## Patentansprüche

**1.** Verfahren zum Massenausgleich eines ersten Moduls (20) einer Turbomaschine, umfassend an einer Drehachse entlang eine Lagerebene (22) auf einer Seite und eine Verbindungsebene (24) auf der anderen Seite, im Verhältnis zu einem Rotor (1), der das Modul (20) umfasst, wobei
ein äquivalentes ergänzendes Modul definiert wird, so dass die beiden Module durch Zusammenfügen entlang der Verbindungsebene (24) einen zu dem genannten Rotor äquivalenten Rotor bilden,
die Gesamtunwucht des äquivalenten Rotors und die entsprechende Korrektur, die auf das Modul anzuwenden ist, bestimmt werden,
**dadurch gekennzeichnet, dass** es folgende Schritte umfasst:

Bestimmen des Rundlauffehlers des Lagers (22) des ersten Moduls (20) im Verhältnis zu der Achse, die zur Verbindungsebene (24) senkrecht ist,
Berechnen der theoretischen geometrischen Unwucht des äquivalenten ergänzenden Moduls,
Anbringen eines Kurzzapfens (40) auf dem ersten Modul auf Seiten der Verbindungsebene (24), um einen Kurzrotor zu bilden, dessen Drehachse im Wesentlichen mit der Achse des Moduls (20) übereinstimmt, und Messen der Unwucht des Kurzrotors,
Bestimmen der Gesamtunwucht des Moduls, wobei zur Unwucht des Kurzrotors eine systematische Unwucht hinzugefügt wird, die der geometrischen Unwucht entspricht.

**2.** Verfahren nach dem vorhergehenden Anspruch, wobei der Rotor ein Turbotriebwerkrotor ist und der Massenausgleich des Kompressormoduls und des Turbinenmoduls getrennt erfolgt.

*Fig. 1*

*Fig. 2*

Fig. 3

Fig. 4

Plan C1    Plan C2

Bp ◉ Balourd pièce
Bg ◉ Balourd géométrique
BT ◉ Balourd à corriger

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4586225 A